# EUROPEAN PATENT APPLICATION

(11) **EP 1 842 632 A1**
(43) Date of publication of application: **10.10.2007**
(21) Application number: 05826704.8
(22) Date of filing: 19.12.2005
(51) Int. Cl.: B26B 15/00, A01G 3/037

(54) **PORTABLE MOTOR-DRIVEN CUTTING TOOL**

(30) Priority: 27.01.2005 ES 200500149
(71) Applicant: Gurri Molins, Josep, 08140 Caldes de Montbui (Barcelona) (ES)
(72) Inventor: Gurri Molins, Josep, 08140 Caldes de Montbui (Barcelona) (ES)
(74) Representative: Gislon, Gabriele
(86) International application number: PCT/ES2005/000689
(87) International publication number: WO 2006/079668

(57) **Abstract**

The invention relates to a hand-held motor-driven cutting tool. The tool comprises: a support (1) in which first and second jaws (2, 3) are mounted, one (2) of said jaws being pivotable about an axle (5) of the support body (1); actuation means (4) which are mechanically connected to the pivoting jaw (2); a trigger which is designed to activate the actuation means (4) in order to move the pivoting jaw (2); and first position detecting means comprising a detector (D1)able to continuously detect the positions adopted by the pivoting jaw (2). The invention also comprises second position detecting means which comprise a detector able to continuously detect the positions adopted by the trigger and an electronic system which establishes a univocal correspondence between each of the positions detected for the trigger and a corresponding position detected for the pivoting jaw (2).

## Description

### Technical field

The present invention generally relates to a hand-held motor-driven cutting tool, and particularly to a hand-held cutting tool allowing a precise control of the opening and closing of jaws of said tool, in relation to a trigger for activating such tool.

The cutting tool of the present invention is mainly but not exclusively applicable to agricultural use shears such as pruning shears.

### State of the prior art

Manually actuated cutting tools such as pruning shears are known, which tools comprise a support, a pair of jaws mounted on a support, at least one of which comprising an active cutting member mounted so as to rotate an angle with respect to an axle, the other jaw being a fixed jaw. Actuation means, such as for example an electric geared motor or a hydraulic or pneumatic cylinder, are also mounted in said support, which means have an outlet element connected to said active cutting member by means of a transmission. The assembly generally comprises an enveloping casing fixed to the support and defining a grip in which a moving trigger is arranged in a suitable position to be pressed with at least one finger. This trigger is associated to a control device adapted to activate the actuation means in response to an action on the trigger in order to carry out a closing and opening operation for closing and opening said active cutting member with respect to the fixed jaw, or both jaws with respect to one another when both of them can move. Once it has been triggered by an action on the trigger, the closing and opening operation is generally carried out without interruptions and comprises a transition from an open position to a closed position followed by a transition from said closed position to said open position again. Both transitions are carried out at full speed and power of the actuation means.

A drawback of this type of cutting tools is that in the rest position, before starting to cut, the jaws are in the fully open position, which can cause difficulties for the operator to observe if the cutting will be carried out in the suitable place in the object to be cut for example. The open jaws can also cause difficulties for introducing the shears in hard to reach places when an object is to be cut in one of such places.

The state of the art evolved in the following manner for the purpose of achieving a greater control on the movement of the jaw or jaws of such cutting tools:

Patent EP-A-0291431 describes a hand-held cutting tool of the type described above actuated by an electric geared motor, comprising position detecting means to detect a series of neutral positions to be adopted by the trigger, for the purpose of any movement between said neutral positions causing the activation of an electric motor moving one of the jaws of the cutting tool, the trigger being immobilized in each of said neutral positions. The monitoring of the movements of the jaw is not contemplated.

Spanish patent application number 200400516 represents the closest state of the art, because it provides a mechanically actuated cutting tool provided with position detecting means to detect different positions of the jaw, including an open jaw position, a closed jaw position and a series of intermediate positions. It is thus enabled that the user can carry out the closing and opening operation by parts, namely, one or more first approaching operations at one (or more than one) low-power slow speed, and a cutting operation at a full-power fast speed. To that end, the tool proposed by said application comprises an electric or electronic circuitry, adapted to activate actuation means in a manner suitable for carrying out said operations. Position detecting means are also provided to detect different positions of the trigger so as to carry out an approaching operation at a slow speed when an intermediate position of the trigger is detected, and a cutting operation at a fast speed when the trigger is fully pressed.

A limitation of the mentioned background document is that the different operations which can be carried out are limited by the number of detectors to be incorporated, therefore a large number of detectors and associated circuitry (for example connecting wires) is needed if a large number of approaching operations, i.e. a high precision, is to be achieved. On the other hand, the approaching speeds which can be selected for each operation, or opening or closing section, must be programmed beforehand and must be associated to each intermediate position of the trigger and corresponding approaching operation or section.

### Disclosure of the Invention

It therefore appears to be necessary to offer an evolutionary step with respect to the state of the art, taking form as a cutting tool the control of which is more precise thanks to a continuous detection of the movements of some of its moving elements, preferably one of its jaws, and which does not have the mentioned drawbacks.

The present invention relates to a hand-held motor-driven cutting tool, such as pruning shears, comprising a support in which first and second jaws incorporating respective cutting blades are mounted, one of said jaws being pivotable about an axle of said support body, actuation means fixed to said support and connected through a kinematic chain to said pivoting jaw, a trigger which is adapted to activate said actuation means in order to move at least said pivoting jaw between an open position and a closed position and vice versa, and first position detecting means to detect different positions of the pivoting jaw, including said open position, said closed position, and a series of intermediate positions.

Said first position detecting means comprise a detector able to continuously detect the positions adopted by the pivoting jaw, such that the precision offered by the detector readings is very high. The knowledge at all times of said positions is very useful because it enables carrying out a very precise control of the cutting tool by means of a good management of such positions. Such readings can also be used for other purposes, such as obtaining a register thereof for counting the number of operations carried out partially or completely, and thus predicting (together with other parameters such as consumption) the useful life of the shear.

To achieve the mentioned precise control of the cutting tool, it also comprises second position detecting means to detect different positions of the trigger, including a rest position, an end-of-run position, when the trigger is fully pressed, and a series of intermediate positions.

Said second position detecting means also comprise a detector able to continuously detect the positions adopted by the trigger throughout its path, and that stated above with respect to the readings of the positions of the jaw being also valid for the readings of the positions of the trigger.

The previous readings are supplied to an electronic system comprised in the system, able to establish a univocal correspondence between each of the positions detected by the trigger and a corresponding position detected for the pivoting jaw and registers them in a corresponding memory. Said correspondence is generally established at first time of adjustment or synchronization of the movements of both the trigger and the pivoting jaw.

Continuous detection is understood as that considered to be so by a person skilled in the art, due to the high sampling frequency of the electronic system acquiring the readings of the detectors and/or to the high frequency of detections carried out by the detectors.

As pointed out above, the main use of the proposed continuous detection is to be able to precisely control the operations to be carried out, the present invention enabling a freehand control of said operations, both as regards the direction and orientation thereof, and the angle, speed or speeds at which they are carried out.

To that end, the mentioned electronic system is also associated to the actuation means to selectively activate them upon pressing the trigger according to said correspondence, such that when the trigger is not pressed the pivoting jaw is fully open, when the trigger is fully pressed the pivoting jaw will be fully closed, when it is pressed at 50% of its path the pivoting jaw will also be closed up to 50% of its path, and in a similar manner for the remaining intermediate positions.

By means of the present invention, it is also possible to move the pivoting jaw not only according to said correspondence but also according to operation programs which can be accessed by the electronic system and can be selected by an operator.

Each of said operation programs comprises a position table and/or a speed table, said tables being different from one another.

Each position table has assigned for each detected position of the trigger a corresponding position to be reached by the pivoting jaw by means of the corresponding activation of the actuation means.

In other words, by means of selecting a program with one of said position tables, it is possible that during the entire run of the trigger the jaw only moves, for example, from a fully closed position to an intermediate opening position, or vice versa, it being possible to cut elements which would be inaccessible with the fully open tool upon selecting said program.

Each speed table has assigned for each section comprised between two adjacent or non-adjacent detected positions of the trigger, a corresponding movement speed to be developed by the pivoting jaw between two positions corresponding to said two positions of the trigger by means of the corresponding activation of the actuation means.

It is thus achieved that upon selecting an operation program with one of said speed tables, an approaching operation, for example, can be carried out from an open position to a predetermined position at a slow speed, and a cutting operation can be carried out from said predetermined position to a closed position at a high speed.

The four positions (two for the trigger and two for the jaw) defining each of said sections can correspond to those established in said correspondence, if the operation program only comprises a speed table, or to those included in a position table if the operation program includes a position table in combination with a speed table.

For the selection of said operation programs, the cutting tool comprises a selecting device which can be accessed by the operator and is associated to said electronic system, and the operation programs are generally registered in a memory of the electronic system.

A misadjustment in the movement of the pivoting jaw may occur with time and use or due to other reasons, i.e. upon pressing the trigger up to a determined position the response obtained relating to the movement of the jaw is not the expected one, or in other words, in the event that the position detected as that reached by the pivoting jaw does not correspond with that established in said correspondence or in said position table of the selected operation program for a detected position of the trigger. To combat such misadjustment, the electronic system comprises adjustment means for adjusting the movement of the jaw until it is placed at the position corresponding to it according to the registered correspondence or the selected operation program. This is achieved by means of the suitable activation of the actuation means, for example by supplying more voltage if the misadjustment is due to a shortage, i.e. the jaw has not reached the expected position, and less voltage if the misadjustment is by excess.

A freehand control of the closing and opening operations in a precise and direct manner with respect to the pressure exerted on the trigger is thus achieved with the present invention.

In other words, for a basic model of the proposed tool which does not have the described operation programs for example, if the trigger is slowly actuated from its initial or rest position to an intermediate position, the pivoting jaw will be also slowly closed to an also intermediate position. If the trigger is considerably pressed, i.e. it is moved at a high speed, from said intermediate position thereof to another point such as its end of run, the pivoting jaw will be fully closed (if such point was the end of run of the trigger) also at a high speed in a manner that is substantially proportional to the movement speed of the trigger.

For a more complex model of the proposed cutting tool having the proposed operation programs, both the positions adopted by the pivoting jaw and the speeds with which it moves depend on the selected program in addition to the trigger.

### Brief description of the drawings

The previous and other features of will be better understood from the following detailed description of several exemplary embodiments with references to the accompanying drawings, in which:
Figure 1 is a schematic side view of the cutting tool according to the present invention;
Figure 2a is a partial schematic view of the cutting tool of the present invention illustrating a first exemplary embodiment relating to a type of continuous position detector for detecting the positions to be adopted by the pivoting jaw;
Figure 2b is a sectional view taken through plane A-A indicated in Figure 2a;
Figures 3a-3c are partial schematic views illustrating a second exemplary embodiment of the cutting tool of the present invention relating to another type of continuous position detector for detecting the positions to be adopted by the pivoting jaw, Figure 3a being an elevational view and Figures 3b and 3c being two plan views for two different operative situations of the cutting tool;
Figure 4a is a partial schematic view illustrating a exemplary third embodiment of the cutting tool of the present invention relating to an additional type of continuous position detector for detecting the positions to be adopted by the pivoting jaw;
Figure 4b is a sectional view taken through plane A-A indicated in Figure 4a;
Figures 4c and 4d are sectional views taken through plane B-B indicated in Figure 4a, for two different operative situations of the cutting tool;
Figure 5a is a partial schematic view illustrating a fourth exemplary embodiment of the cutting tool of the present invention, relating to a type of continuous position detector for detecting the positions to be adopted by the trigger;
Figure 5b is a sectional view taken through plane B-B indicated in Figure 5a;
Figure 5c is a sectional view taken through plane C-C indicated in Figure 5a;
Figures 6a-6b are partial schematic views illustrating a fifth exemplary embodiment of the cutting tool of the present invention relating to another type of continuous position detector for detecting the positions to be adopted by the trigger, and
Figure 7 is a partial schematic view illustrating a sixth exemplary embodiment of the cutting tool of the present invention relating to another type of continuous position detector for detecting the positions to be adopted by the trigger.

### Detailed description of exemplary embodiments

As shown in the figures, the hand-held motor-driven cutting tool proposed by the present invention comprises a support 1 in which first and second jaws 2, 3 incorporating respective cutting blades are mounted, one 2 of said jaws being pivotable about an axle 5 of said support body 1, and actuation means 4 fixed to said support 1 and connected through a kinematic chain to said pivoting jaw 2. Although it is not shown in the figures, for the purposes of the present invention, the cutting tool could be of the type in which both jaws 2, 3 are pivotable and active.

Said actuation means 4 comprise an electric geared motor 4 in the embodiments shown.

The cutting tool also comprises a trigger 6 adapted to activate said actuation means 4 in order to move said pivoting jaw 2 between an open position and a closed position, and vice versa, and first position detecting means to detect different positions of the pivoting jaw 2, including said open position, said closed position, and a series of intermediate positions.

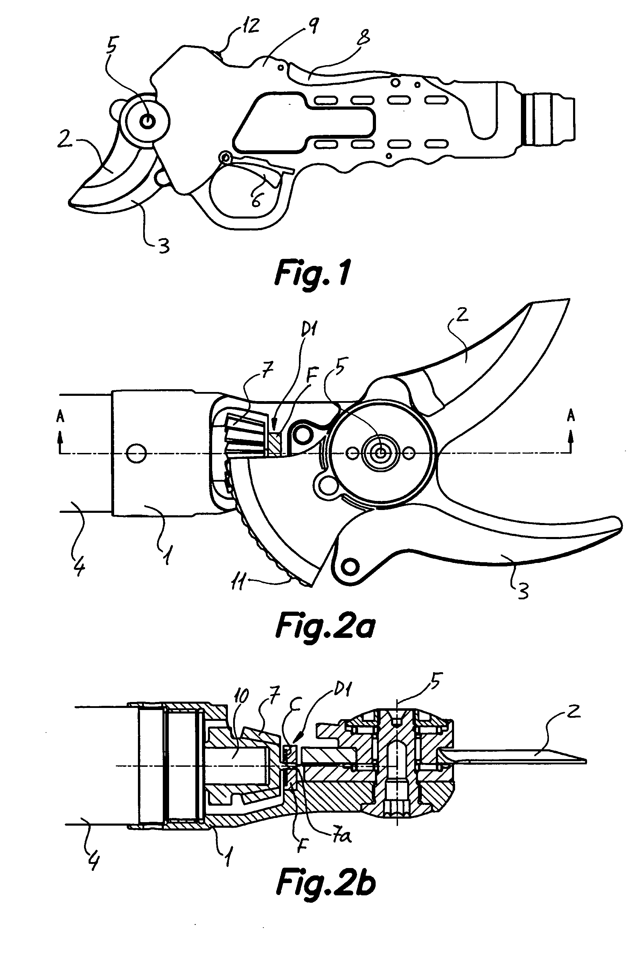

Figure 1 shows a general view of the cutting tool, showing some of the mentioned elements and other elements such as a safety push-button 8, arranged to allow the activation of the actuation means only when its is pressed. Nevertheless, the present invention is also applicable for cutting tools that do not have said safety push-button 8.

As explained above, the first position detecting means comprise a detector D1 which can continuously detect the positions adopted by the pivoting jaw 2.

Both said detector D1 and a detector D2 comprise a moving part C and a fixed part F.

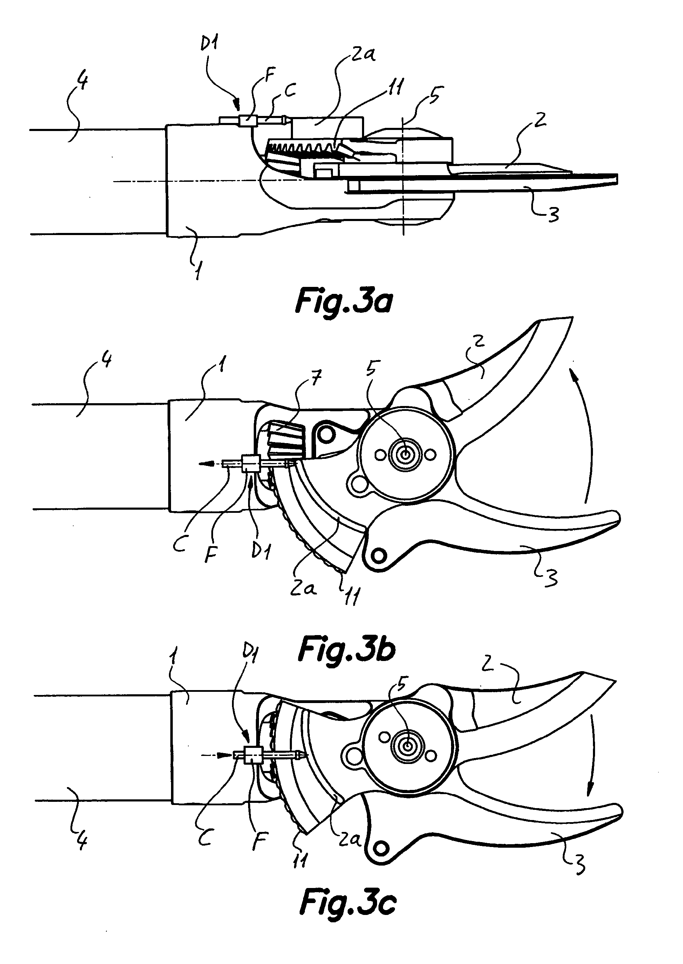

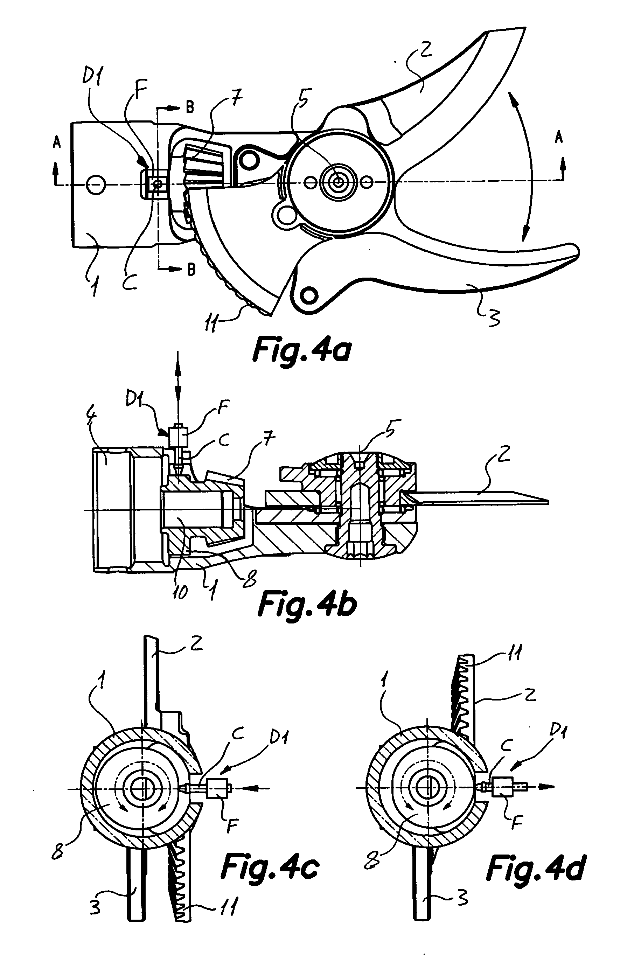

For the embodiment shown in Figures 2a-2b, said detector D1 is a rotary potentiometer, and for Figures 3a-3c and 4a-4d it is a linear potentiometer, although another type of continuous detector that may occur to a person skilled in the art is also possible.

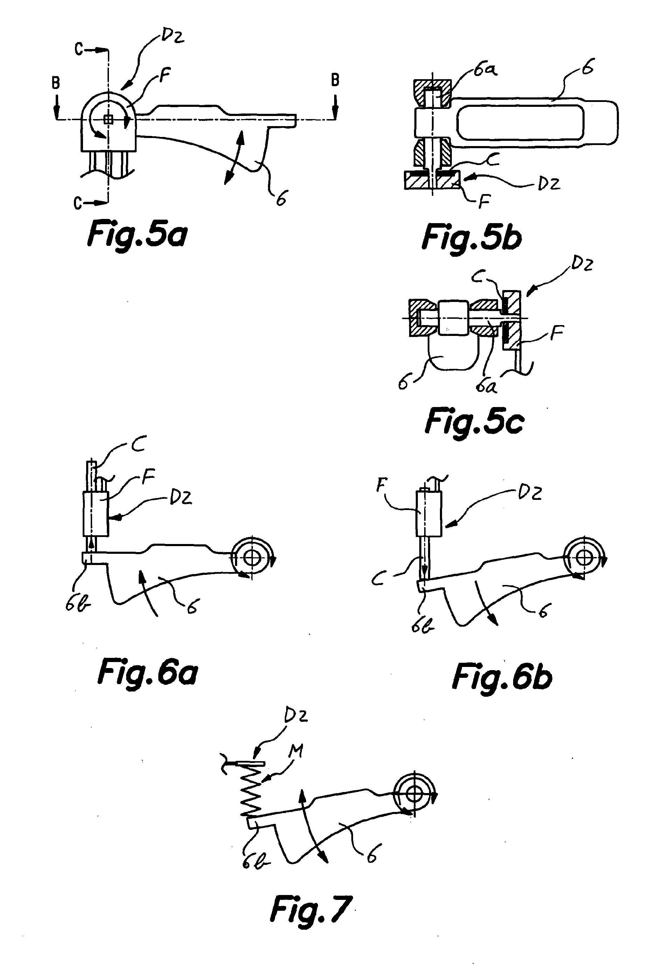

With regard to said detector D2, which can continuously detect all the positions adopted by the trigger 6 throughout its path and belonging to the second position detecting means (also indicated above), it is shown for different exemplary embodiments in Figures 5a-5c and Figures 6a-6b, the detector D2 being a rotary potentiometer for the exemplary embodiment shown in Figures 5a.5c, and a linear potentiometer for the exemplary embodiment shown in Figures 6a-6b.

The fixed parts F of both detectors D1, D2 are fixed to a fixed part of the cutting tool, such as body 1. Figures 2a-2b, 3a-3c and 4a-4d show such situation for the discussed embodiments in which detectors D1, D2 are potentiometers, in such cases the moving part C being a slider, and the fixed part F being the potentiometer body comprising a resistive track on which said slider C slides.

The electronic system comprised in the cutting tool and explained above in the disclosure of the invention section is not shown in the figures but it can be either external to the cutting tool or and internal and housed inside a casing 9 enveloping and housing the support body 1 and other elements of the cutting tool. The internal electronic system can be in the form of a flexible circuit for example, with a series of electric and electronic components, such as a microprocessor, a memory, etc., which can both acquire the mentioned readings of the detectors D1, D2 and treat and process such readings, and act based on the latter on the actuation means 4 through corresponding communication devices supplying the suitable voltage to the actuation means 4, from a power supply which can be accessed by part of the electronic system.

With regard to the detector D1 used to detect the positions of the pivoting jaw 2, which is a potentiometer in the embodiment shown, its respective moving part C, or slider C, is arranged to be moved by the pivoting jaw 2, or by a cam member 2a associated thereto (see Figures 3a-3c) or an element of said kinematic chain, such as a gear wheel 7 (see Figures 2a-2b), or associated to the kinematic chain (see Figures 4a-4d), such that a movement of said pivoting jaw 2 or a movement of said cam member 2a or a movement of said element, corresponding to a respective movement of the pivoting jaw 2, causes a corresponding movement of said moving part C.

Figures 2a-2b show an embodiment for which the detector D1 is a rotary potentiometer and its slider C is linked to said gear wheel 7 through a central appendage or axle 7a comprised therein.

Said gear wheel 7 or pinion is fixed to an output shaft 10 of said geared motor 4, and is in turn meshed with a gear crown sector 11 of said pivoting jaw 2. As a result, when the pinion 7 rotates, slider C will also rotate proportionally to the movement of the pivoting jaw 2 caused by the meshing of said gear crown sector 11 with the pinion 7, the movement of the slider 7 therefore offering a variation of the resistance of the potentiometer D1 that is proportional to the movement of the pivoting jaw 2.

For one embodiment, not shown, in which the output shaft 10 of the geared motor 4 traverses the gear wheel 7, projecting beyond such gear wheel, the slider C of the rotary potentiometer D1 is linked to said output shaft 10 directly or through an appendage similar to appendage 7a.

For another embodiment, not shown, the slider C of the rotary potentiometer D1 is linked to the axle 5 of the gear crown sector 11.

All the exemplary embodiments described above and illustrated, applicable to a rotary potentiometer, are also applicable to another type of detectors that are different but have a rotary moving part C and a fixed part F with respect to which the former rotates. Optical detectors and magnetic detectors are examples of such detectors. In the case of magnetic detectors, said moving part C is a rotary magnet and said fixed part F is a magnetic rotary encoder integrated circuit, preferably model AS5040 of Austria Micro Systems, which will be preferably soldered to a printed-circuit board attached to a fixed part of the cutting tool, such as body 1, and electrically connected to the electronic system.

For other embodiments, moving part C of said detector D1 included in said first detecting means is mounted in relation to the fixed part F so as to move linearly with respect to the fixed part F.

Figures 3a-3c and 4a-4d show two of such embodiments for which detector D1 is a linear potentiometer, although another type of continuous detectors, such as those explained above, are also possible.

In Figures 3a-3c the cutting tool comprises a cam member 2a which is off-center with respect to the axle 5 of the pivoting jaw 2 and arranged to push the slider C of the linear potentiometer D1, such that when the jaws 2, 3 are fully open (situation shown in Figure 3b) the linear slider C, which is rod-shaped, is maximally pressed, and when they are fully closed (situation not shown) the slider C is minimally pressed or is not pressed at all, although the reverse could be true, i.e. the maximum pressure is exerted with the jaws fully closed. Such maximum and minimum pressure might not coincide with the maximum and minimum movements which the slider C can support. This is not relevant because the electronic system can consider the movements undergone by slider C for said maximum and minimum pressure as maximum opening and full closing positions of the jaws 2, 3 of the cutting tool.

Figures 4a-4c show an exemplary embodiment for which the linear potentiometer D1 has been arranged in other place, specifically in an element associated to the mentioned gear wheel 7, in the form of a cam 8 which is off-center with respect to an axle of said gear wheel 7, arranged to push said linear slider C such that when the jaws 2, 3 are fully open (situation shown in Figures 4b and 4c) the linear slider C is minimally pressed, and when they are fully closed (situation shown in Figure 4d) the slider C is maximally pressed, although the reverse could be true as in the previous case. That stated with respect to the correspondence of the pressure with the movements of slider C for the embodiment described above is also applicable here.

All the configurations described and illustrated for the exemplary embodiments in which detector D1 is a linear potentiometer are applicable to other embodiments for which detector D1 is of another type but the moving part C of which is mounted in relation to the fixed part F in order to move linearly with respect to it, as stated above.

Other actuation means and another type of kinematic chains or transmissions, such as for example a hydraulic cylinder with a moving rod connected to the active cutting member by means of one or more connecting rods could obviously also be used, with the condition that such actuation means are susceptible of being controlled by electric or electromechanical means such as electrically-operated valves for example. In such cases the arrangement of detector D1 could be linked to another component of the kinematic chain which is considered to be suitable.

With regard to detector D2 used to continuously detect the positions of trigger 6, it comprises a moving part C arranged to be moved by trigger 6, an element associated thereto or an intermediate mechanism, such that a movement of said trigger 6, of said element or of a part of said intermediate mechanism causes a corresponding movement of said moving part C.

Parts of a bar mechanism, parts of a mechanical transmission and parts of hydraulic transmission are examples of such parts of intermediate mechanisms.

Figures 5a-5c show an embodiment for which said detector D2 is a rotary potentiometer, and its moving part C is a slider C which is linked to a rotating axle 6a rigidly attached to trigger 6, such that when trigger 6 moves, said axle rotates and in turn makes slider C rotate proportionally.

Figures 6a-6b show another embodiment in which said potentiometer D2 is a linear potentiometer, and its respective slider C is rod-shaped and is arranged such that it can be pushed by an appendage 6b of trigger 6. Figure 6a shows said linear slider C when it is pressed upon pressing trigger 6, and Figure 6b shows the linear slider C in a position in which the trigger exerts a lower pressure thereon.

That discussed previously for slider C of the potentiometer D1, with reference to the correspondence of the respective maximum and minimum movements of slider C with the maximum and minimum pressure exerted on trigger 6 is also completely applicable to potentiometer D2 used for detecting the positions of trigger 6.

In the same manner as for detector D1 for detecting the positions of the pivoting jaw, for detector D2 all the configurations described above for the exemplary embodiments shown in which the detector D2is a potentiometer, either a rotary potentiometer or linear potentiometer, is also applicable for another type of detectors such as those proposed above for detector D1 of the first position detecting means, all that was stated with respect to how slider C is moved being valid for the moving part C of said another type of detectors, such moving part being a rotary moving part (with regard to the equivalence with rotary potentiometers) or mounted in relation to its respective fixed part F in order to move linearly with respect to it (with regard to the equivalence with linear potentiometers).

Figure 7 shows another embodiment in which another type of detector D2 for detecting the positions to be adopted by the trigger 6 is proposed.

In said Figure 7 the second position detecting means comprise a spring M associated to trigger 6, or to an element 6b associated thereto, such as an appendage 6b, such that it is proportionally pressed upon exerting pressure on trigger 6, said spring M having a determined compression factor commonly known as K factor.

For said embodiment, said detector D2 of the second position detecting means is a force measuring device such as a gage arranged in a seating point of said spring M.

For this embodiment, after determining the compression of said spring M based on readings supplied by said force measuring device and on said determined compression factor K of spring M, the electronic system can determine the position of the trigger 6 at all times.

Both detectors D1, D2 are connected to the electronic system through corresponding connections such as a suitable wiring.

A person skilled in the art could introduce changes and modifications in the described embodiments without departing from the scope of the invention as it is defined in the attached claims.

## Claims

1. A hand-held motor-driven cutting tool, of the type comprising a support (1) in which are mounted first and second jaws (2, 3) incorporating respective cutting blades, at least one (2) of said jaws being pivotable about an axle (5) of said support body (1), actuation means (4) fixed to said support (1) and connected through a kinematic chain to said pivoting jaw (2), a trigger (6) adapted to activate said actuation means (4) in order to move at least said pivoting jaw (2) between an open position and a closed position and vice versa, and first position detecting means to detect different positions of the pivoting jaw (2), including said open position, said closed position, and a series of intermediate positions, **characterized in that** said first position detecting means comprise a detector (D1) able to continuously detect the positions adopted by the pivoting jaw (2).

2. A cutting tool according to claim 1, **characterized in that** it further comprises second position detecting means to detect different positions of the trigger (6), including a rest position, an end-of-run position, wherein the trigger (6) is fully pressed, and a series of intermediate positions.

3. A cutting tool according to claim 2, **characterized in that** said second position detecting means comprise a detector (D2) able to continuously detect the positions adopted by the trigger (6) throughout its path.

4. A cutting tool according to claim 3, **characterized in that** it comprises an electronic system associated to said first and second position detecting means, and able to establish a univocal correspondence between each of the positions detected for the trigger (6) and a corresponding position detected for the pivoting jaw (2).

5. A cutting tool according to claim 4, **characterized in that** said electronic system is also associated to said actuation means (4) to selectively activate them upon pressing the trigger (6), according to said correspondence.

6. A cutting tool according to claim 5, **characterized in that** said selective activation is also carried out according to operation programs which can be accessed by the electronic system.

7. A cutting tool according to claim 6, **characterized in that** each of said operation programs comprises at least one position table assigning to each detected position of the trigger (6) a corresponding position to be reached by the jaw (2), by means of the corresponding activation of the actuation means (4), said tables being different from one another.

8. A cutting tool according to claim 6 or 7, **characterized in that** each of said operation programs comprises at least one speed table assigning to each section comprised between two adjacent or non-adjacent detected positions of the trigger (6) a corresponding movement speed to be developed by the jaw (2) between two positions corresponding to said two positions of the trigger (6), by means of the corresponding activation of the actuation means (4), said tables being different from one another.

9. A cutting tool according to claim 8, **characterized in that** each of said operation programs comprises the combination of at least one of said position tables and one of said speed tables.

10. A cutting tool according to claim 6, 7, 8 or 9, **characterized in that** it comprises a selecting device (12) associated to said electronic system for the selection of said operation programs.

11. A cutting tool according to claim 5 or 6, **characterized in that** said electronic system comprises at least one memory for registering said correspondence and/or said operation programs.

12. A cutting tool according to claim 5 or 10, **characterized in that** the electronic system comprises adjustment means for adjusting the position by means of the corresponding activation of the actuation means (4) in the event that for a detected position of the trigger (6), the position detected as that reached by the pivoting jaw (2) does not correspond with that established in said correspondence or in said position table of the selected operation program.

13. A cutting tool according to claim 1 or 3, **characterized in that** said detector (D1, D2) included in said first and/or second detecting means comprises a moving part (C) and a fixed part (F).

14. A cutting tool according to claim 13, **characterized in that** said moving part (C) of said detector (D1) included in said first detecting means is arranged to be moved by said pivoting jaw (2), a cam member (2a) associated thereto or an element of, or associated to, said kinematic chain, such that a movement of said pivoting jaw (2) or a movement of said cam member (2a) or a movement of said element, corresponding to a respective movement of the pivoting jaw (2), causes a corresponding movement of said moving part (C).

15. A cutting tool according to claim 14, **characterized in that** said element of said kinematic chain is a gear wheel (7).

16. A tool according to claim 14 or 15, **characterized in that** said moving part (C) of said detector (D1) included in said first detecting means is a rotary moving part.

17. A cutting tool according to claim 16 when it depends on claim 15, **characterized in that** said gear wheel (7) comprises a central appendage or axle (7a) through which said rotary moving part (C) is linked.

18. A cutting tool according to claim 14 or 15, **characterized in that** said moving part (C) of said detector (D1) included in said first detecting means is mounted in relation to said fixed part (F) so as to move linearly with respect to the fixed part (F).

19. A cutting tool according to claim 18, **characterized in that** said cam member (2a) is off-center with respect to said axle (5) of the pivoting jaw (2), and is arranged to push said moving part (C).

20. A cutting tool according to claim 18 when it depends on claim 15, **characterized in that** said element associated to said kinematic chain is a cam (8) that is off center with respect to an axle of said gear wheel (7), and is arranged to push said moving part (C).

21. A cutting tool according to claim 13, **characterized in that** said moving part (C) of said detector (D2) included in said second detecting means is arranged to be moved by said trigger (6), an element associated thereto, or an intermediate mechanism, such that a movement of said trigger (6), a movement of said element, or a movement of a part of said intermediate mechanism causes a corresponding movement of said moving part (C).

22. A cutting tool according to claim 21, **characterized in that** said moving part (C) of said detector (D2) included in said second detecting means is a rotary moving part.

23. A cutting tool according to claim 22, **characterized in that** said element associated to the trigger (6) is a rotating axle (6a) rigidly attached thereto and linked to the moving part (C) of said detector (D2) included in said second detecting means.

24. A cutting tool according to claim 21, **characterized in that** said moving part (C) of said detector (D2) included in said second detecting means is mounted in relation to said fixed part (F) so as to move linearly with respect to the fixed part (F).

25. A cutting tool according to claim 24, **characterized in that** said element associated to the trigger (6) is an appendage (6b), and is arranged to push the moving part (C) of said detector (D2) included in said second detecting means.

26. A cutting tool according to claim 21, **characterized in that** said part of said intermediate mechanism is selected from a group including: a part of a bar mechanism, a part of a mechanical transmission and a part of a hydraulic transmission.

27. A cutting tool according to claim 13, **characterized in that** said detectors (D1, D2) included in said first and/or second detecting means are each of them selected from a group including: rotary potentiometers, linear potentiometers, magnetic detectors and optical detectors.

28. A cutting tool according to claim 27, **characterized in that** for said magnetic detectors, said moving part (C) is a rotary magnet and said fixed part (F) is a magnetic rotary encoder integrated circuit.

29. A cutting tool according to claim 27, **characterized in that** for said rotary and linear potentiometers, said moving part (C) is a slider and said fixed part (F) is the potentiometer body comprising a resistive track on which said slider (C) slides.

30. A cutting tool according to claim 4, **characterized in that** said second position detecting means comprise a spring (M) associated to the trigger (6) or to an element (6b) associated thereto, such that said spring (M) is proportionally pressed upon exerting pressure on the trigger (6), the spring (M) having a determined compression factor, and **in that** said detector (D2) of said second position detecting means is a force measuring device arranged in a seating point of said spring (M).

31. A cutting tool according to claim 30, **characterized in that** said electronic system is able to determine the position of the trigger (6) at all times, after determining the compression of said spring (M) based on readings supplied by said force measuring device and on said determined compression factor of the spring (M).
